**Europäisches Patentamt**

**European Patent Office**

**Office européen des brevets**

(19)

(11) Veröffentlichungsnummer: **0 289 485**
**A1**

# EUROPÄISCHE PATENTANMELDUNG

(12)

(21) Anmeldenummer: 88890106.3

(22) Anmeldetag: 02.05.88

(51) Int. Cl.⁴: **F 17 D 1/20**
**F 16 L 55/04, F 24 H 9/20**

(30) Priorität: 30.04.87 AT 1090/87

(43) Veröffentlichungstag der Anmeldung:
02.11.88 Patentblatt 88/44

(84) Benannte Vertragsstaaten:
BE CH DE LI LU NL

(71) Anmelder: **Randa, Konrad Dr.**
**Anton Langergasse 46**
**A-1130 Wien (AT)**

**Czerny, Manfred Dipl.-Ing.**
**Am Blumenhang 7**
**A-8010 Graz (AT)**

(72) Erfinder: **Randa, Konrad Dr.**
**Anton Langergasse 46**
**A-1130 Wien (AT)**

**Czerny, Manfred Dipl.-Ing.**
**Am Blumenhang 7**
**A-8010 Graz (AT)**

(74) Vertreter: **Müllner, Erwin, Dr. et al**
**Patentanwälte Dr. Erwin Müllner Dipl.-Ing. Werner**
**Katschinka Postfach 159 Weihburggasse 9**
**A-1010 Wien (AT)**

(54) Schaltungsanordnung zur Begrenzung von Strossbelastungen von hydraulischen Fernleitungen.

(57) Zur Begrenzung von Druckstoßbelastungen bei hydraulischen Fernleitungen mit einer Vorlaufleitung (1, 21, 31) und einer Rücklaufleitung (2, 22, 32) ist eine Schaltungsanordnung vorgesehen, die an mindestens einer Stelle (14, 18) zwischen der Vorlaufleitung und der Rücklaufleitung eine an sich bekannte Überströmarmatur (7, 8; 20, 30) aufweist. Als Überströmarmatur können beispielsweise druckabhängig öffnende selbsttätige Rückschlagklappen (30), Überdruckventile (20) mit Druckfühlern (25, 26) vorgesehen sein, die im Normalbetrieb geschlossen sind und die die parallelen Zweige der Fernleitung bei Überschreiten bzw. Unterschreiten von Grenzwerten kurzschließen, sodaß eine Druckangleichung stattfinden kann.

Fig. 1

EP 0 289 485 A1

## Beschreibung

## Schaltungsanordnung zur Begrenzung von Druckstoßbelastungen von hydraulischen Fernleitungen

Die Erfindung betrifft eine Schaltungsanordnung zur Begrenzung von Druckstoßbelastungen von hydraulischen Fernleitungen, die aus jeweils einer Vor- und einer Rücklaufleitung mit gegenseitiger Entlastung - unter Vermeidung von Ausgleichsbehältern - bestehen.

In Fernleitungen der vorgenannten Art treten Druckstöße als Überdrücke und Unterdrücke auf, die durch beabsichtigte Schalthandlungen von Pumpen und Armaturen oder auch durch den plötzlichen Ausfall derartiger Aggregate entstehen. Von der Störstelle laufen dann nach beiden Richtungen Druckwellen ab. Die positive Druckwelle verursacht bei Überschreiten der statischen und dynamischen Belastbarkeitskennlinie der Leitungen bzw. des Netzes eine unmittelbare Beschädigung der Anlage. Die negative Druckwelle führt beim Unterschreiten des Dampfdruckes des geförderten Mediums zu einem Abreißen der Strömung und dadurch bedingt ebenso zu Schäden in der Anlage.

In Kenntnis dieser Gefahren hat man in Fernleitungen beispielsweise Ausgleichstanks, Windkesselanlagen oder Wasserschlösser eingebaut, die durchaus geeignete Maßnahmen zum Auffangen der vorge nannten Druckstöße darstellen. Auch wurden verschiedentlich Rohrleitungen derart überdimensioniert, daß Druckwellen in keinem Fall zu Beschädigungen führen konnten. Es bedarf keinerlei Diskussion darüber, daß alle vorgenannten Maßnahmen besonders kostenintensiv, voluminös und bei Leitungen der eingangs beschriebenen Art somit unwirtschaftlich sind.

Aus der DE-OS 30 36 789 ist eine Vorrichtung zur Entlastung einer einzelnen Rohrleitung von Druckstößen bekannt, die ein Druckentlastungsventil zwischen der zu schützenden Rohrleitung und einem speziell darin vorgesehenen Behälter umfaßt. Das Druckentlastungsventil besitzt einen veränderbaren Strömungsquerschnitt in Form eines Ringraumes zwischen einer elastischen zylindrischen Manschette, die einem Rohrstutzen entspricht und die im Inneren des Ventilgehäuses konzentrisch zu einem Sperrkörper liegt. Bei Normalbetrieb liegt die Manschette an dem Sperrkörper an. Das Ventil sperrt. Bei Überdruck dehnt sich die Manschette aus und hebt in radialer Richtung von dem zentralen Sperrkörper ab. In der DE-OS 30 36 789 sind zusätzliche Einrichtungen beschrieben, die die Durchlaßcharakteristik des Druckentlastungsventils beeinflussen.

Die Erfindung zielt darauf ab, eine Begrenzung von Druckstoßbelastungen in Fernleitungen, die Vor- und Rücklaufleitungen umfassen, ohne besonderem baulichen Aufwand auf einfache Weise zu ermöglichen. Dies wird erfindungsgemäß dadurch erreicht, daß zwischen Vorlaufleitung und Rücklaufleitung mindestens eine an sich bekannte Überströmarmatur, wie beispielsweise ein Überdruckventil oder eine Rückschlagklappe zum Kurzschließen und damit zu einer Druckänderung in Richtung auf eine Druckangleichung der beiden Leitungen bei Erreichen von Grenzdruckwerten vorgesehen ist. Durch Ansprechen der Überströmarmaturen erfolgt eine Druckangleichung (als Sonderfall ein Druckausgleich) in den parallelen Leitungen, sodaß einerseits der obere Grenzdruck nicht erreicht und andererseits der jeweilige Dampfdruck nicht unterschritten wird. Besonders vorteilhaft ist die erfindungsgemäße Schaltungsanordnung, weil nur Überströmarmaturen erforderlich sind, die industriell gefertigt werden und somit keine größeren baulichen Maßnahmen wie Ausgleichstanks in eigenen Bauwerken oder lange Ausgleichsrohre über eigenen Trassen benötigt werden.

Für die geeignete Auswahl der Lage an denen diese Armaturen zu installieren sind, ist nachstehende Überlegung maßgebend.

Unter Berücksichtigung der Druckwellenlaufzeiten der von Pumpen und Armaturen bei Betätigung in strömenden Medien erzeugten gegenläufigen und gegensinnigen Druckwellen kann es an einer bestimmten Stelle in der einen Leitung zu einem Druckanstieg und in der anderen parallelen Leitung zu einem Druckabfall kommen. Dieser Effekt wird nun durch Überströmarmaturen oder Rückschlagklappen an der ermittelten Stelle so genützt, daß der Überdruck zum Unterdruck hin entlastet wird. Da in einem Fernleitungssystem dieser Bauart die für die Druckstoßbeurteilung maßgeblichen Lastfälle durch Simulationsrechnungen definiert und die Druckverhältnisse an jeder Stelle der Rohrleitung vorausbrechnet werden können, kann durch geeignete Auswahl von Anzahl und Lage der Überströmarmaturen grundsätzlich jede Fernleitungskonfiguration der beschriebenen Form mit Vor- und Rücklaufleitung druckstoßmäßig abgesichert werden.

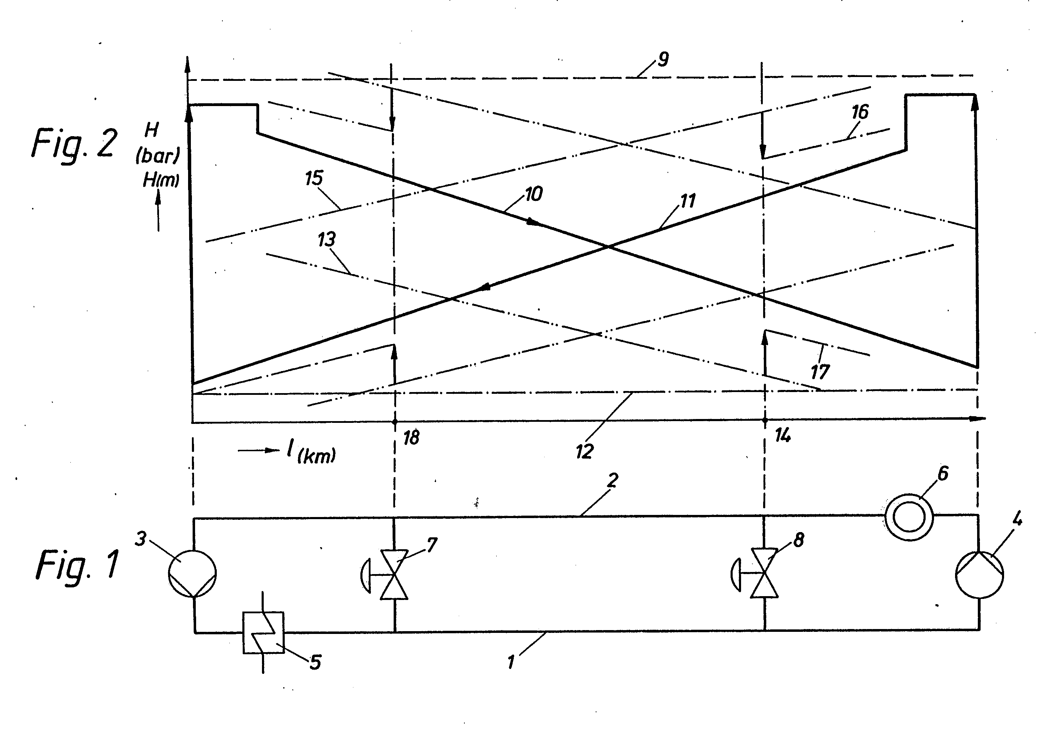

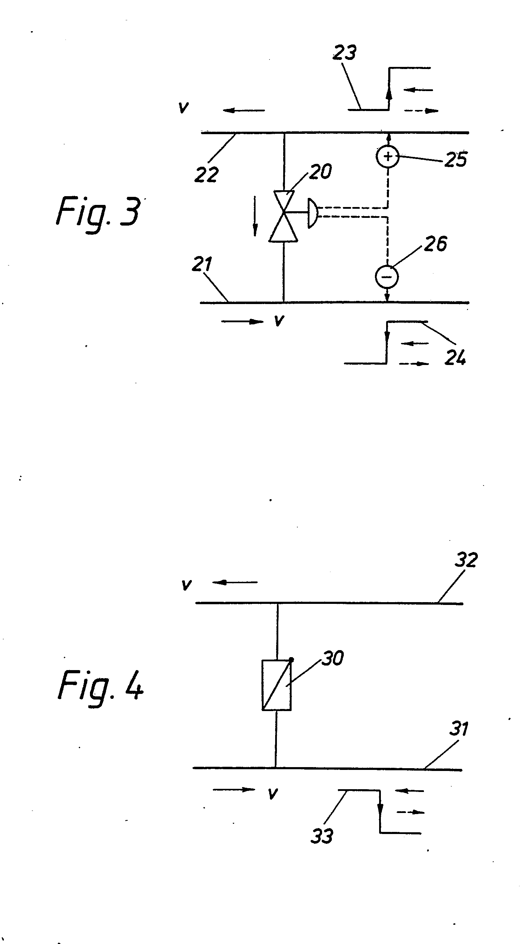

Die Erfindung wird nachstehend an Hand der Zeichnungen erläutert. Fig. 1 zeigt eine Fernwärmeleitung mit Pumpen, Kessel, Verbraucher und Überströmarmaturen, Fig. 2 ein Druckdiagramm zu Fig. 1, Fig. 3 ein Überströmventil und Fig. 4 eine Rückschlagklappe jeweils zwischen der Vorlauf- und Rücklaufleitung.

Eine Fernwärmeleitung umfaßt nach Fig. 1 eine Vorlaufleitung 1 und eine Rücklaufleitung 2, Pumpen 3 und 4, sowie einen Kessel 5 auf der Speiseseite und ein Verbrauchernetz 6 auf der Versorgungsseite. Gemäß der Erfindung sind zur Druckangleichung zwischen den Leitungen 1 und 2 die Überströmventile 7 und 8 vorgesehen.

In Fig. 2 sind die Betriebsdrucklinien (Druck oder Höhe eines Mediums je über Entfernung in km) dargestellt. Die Pumpe 3 bringt das Medium auf einen Druck knapp unterhalb der Maximaldrucklinie 9, im Kessel 5 erfolgt ein Druckabfall, über die Leitungslänge ergibt sich die Drucklinie 10 in der Vorlaufleitung 1. Am Leitungsende wird der Druck durch die Pumpe 4 wieder angehoben und durch das Verbrauchernetz 6 kommt es zu einem Druckabfall. Daran schließt die Drucklinie 11 für die Rücklaufleitung 2 an, die wieder zur Pumpe 3 führt. Im Ausführungsbeispiel werden horizontale Leitungen vorausgesetzt. Die geschlossene Betriebsdrucklinie 10-11 liegt zwischen der bereits erwähnten Maximaldrucklinie 9, welche durch die Rohrleitungsdimension bestimmt wird, und einer Minimaldrucklinie 12, welche zur Vermeidung von Ausdampfungen in der Rohrleitung nicht unterschritten werden darf.

Es werden zwei Störfälle untersucht:

## 1. Ausfall Pumpe 3

Auf der Vorlaufleitung 1 wird eine Druckabsenkung gemäß Linie 13 wirksam, welche an der Stelle 14 der Vorlaufleitung 1 in den Bereich der Grenzlinie 12 kommt. An dieser Stelle ist daher die Überströmarmatur 8 zu installieren.

Gleichzeitig wird auf der Rücklaufleitung 2 ein Druckanstieg gemäß Linie 15 wirksam, sodaß an Stelle 14 die Überströmarmatur 8 beim Ansprechen diese Drucklinie absenkt (gemäß Linie 16) und auf der Vorlaufleitung 1 die Unterdrucklinie 13 auf 17 anhebt.

Damit wird erreicht, daß die Grenzwerte gemäß Linien 9 und 12 nicht unter- bzw. überschritten werden.

## 2. Ausfall Pumpe 4

Dieser führt an der Stelle 18, analog zu den unter Fall 1 genannten Druckänderungen, zu unzulässiger Druckunter- bzw. Überschreitung. Es ist daher an der Stelle 18 die Überströmarmatur 7 zu installieren.

Somit kann eine Fernwärmeversorgungsanlage nach Fig. 1 durch die Installation von zwei Überströmarmaturen 7 und 8 gegen Über- und Unterdruck geschützt werden.

Fig. 3 zeigt ein Überströmventil 20 zwischen einer Vorlaufleitung 21 und einer Rücklaufleitung 22 in einem Störungsfall. Eine positive Druckwelle 23 läuft auf der Rücklaufleitung 22 und eine negative Druckwelle 24 läuft auf der Vorlaufleitung 21. Das Ventil 20 wird durch Drucksensoren 25, 26 gesteuert, wobei hier Sensor 25 bei einem Überdruckgrenzwert und Sensor 26 bei einem Unterdruckgenzwert anspricht.

Nach Fig. 4 ist eine Rückschlagklappe 30 zwischen einer Vorlaufleitung 31 und einer Rücklaufleitung 32 angeordnet. Es wird angenommen, daß im Störungsfall eine negative Druckwelle 33 längs der Vorlaufleitung 31 läuft. Die Druckdifferenz in den Leitungen wirkt unmittelbar auf die Rückschlagklappe 30. Sie öffnet und bewirkt so eine Absicherung zwischen den beiden Rohrleitungen.

wie beispielsweise ein Überdruckventil (20) oder eine Rückschlagklappe (30) zum Kurzschließen und damit zu einer Druckänderung in Richtung auf eine Druckangleichung der beiden Leitungen (1, 21, 31; 2, 22, 32) bei Erreichen von Grenzdruckwerten vorgesehen ist.

## Patentansprüche

Schaltungsanordnung zur Begrenzung von Druckstoßbelastungen von hydraulischen Fernleitungen, die aus jeweils einer Vorund einer Rücklaufleitung mit gegenseitiger Entlastung - unter Vermeidung von Ausgleichsbehältern - bestehen, dadurch gekennzeichnet, daß zwischen Vorlaufleitung (1, 21, 31) und Rücklaufleitung (2, 22, 32) mindestens eine an sich bekannte Überströmarmatur (7, 8; 20, 30),

0289485

Fig. 1

Fig. 2

$H$ (bar)
$H$ (m)

$l$ (km)

0289485

**Fig. 3**

**Fig. 4**

Europäisches
Patentamt

**EUROPÄISCHER RECHERCHENBERICHT**

Nummer der Anmeldung

EP 88890106.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DD - A - 201 041 (VEB ENERGIE-KOMBINAT BERLIN)  <br> * Gesamt *  <br> -- | 1 | F 17 D 1/20 <br> F 16 L 55/04 <br> F 24 H 9/20 |
| P,A | DE - A1 - 3 638 919 (VEB WÄRME-ANLAGENBAU)  <br> * Gesamt *  <br> -- | 1 | |
| A | DD - A5 - 244 400 (ENERGIAGAZDALKO-DASI INTEZET)  <br> ---- | | |

| RECHERCHIERTE SACHGEBIETE (Int. Cl.4) |
|---|
| F 17 D 1/00 |
| F 16 L 55/00 |
| F 24 H 9/00 |
| F 16 K 47/00 |
| G 05 D 16/00 |

Der vorliegende Recherchenbericht wurde für alle Patentansprüche erstellt.

| Recherchenort | Abschlußdatum der Recherche | Prüfer |
|---|---|---|
| WIEN | 20-07-1988 | SCHUGANICH |